# EUROPÄISCHE PATENTSCHRIFT

(11) **EP 3 967 936 B1**
(45) Veröffentlichungstag und Bekanntmachung des Hinweises auf die Patenterteilung: **25.09.2024**
(21) Anmeldenummer: 21193415.3
(22) Anmeldetag: 27.08.2021
(51) Int. Cl.: F24D 3/14

(54) **HALTEFLÄCHE FÜR EIN FLÄCHENTEMPERIERUNGSELEMENT SOWIE DIESES UMFASSENDES FLÄCHENTEMPERIERUNGSSYSTEM**
HOLDING SURFACE FOR AN AREA TEMPERATURE CONTROL ELEMENT AND AREA TEMPERATURE CONTROL ELEMENT COMPRISING SAME
SURFACE DE MAINTIEN POUR UN ÉLÉMENT DE THERMORÉGULATION DE SURFACE, AINSI QUE SYSTÈME DE THERMORÉGULATION DE SURFACE COMPRENANT UNE TELLE SURFACE

(30) Priorität: 09.09.2020 DE 202020105196 U
(43) Veröffentlichungstag der Anmeldung: 16.03.2022
(73) Patentinhaber: REHAU Industries SE & Co. KG, 95111 Rehau (DE)
(72) Erfinder: Beck, Thomas, 90513 Zirndorf (DE); Burkhardt, Oliver, 91080 Uttenreuth (DE); Koch, Klaus Paul, 90513 Zirndorf (DE); Vohler, Tobias, 92318 Neumarkt (DE); Weißmann, Lars, 91341 Röttenbach (DE)

(56) Entgegenhaltungen:
- WO-A1-2015/139898
- DE-U1- 202010 009 133
- DE-U1- 202015 105 645
- DE-U1- 202016 104 752

## Beschreibung

Die vorliegende Erfindung betrifft eine Haltefläche für ein Flächentemperierungssystem, die einen Träger, der eine Reliefstruktur mit tiefen Bereichen und erhöhten Bereichen aufweist, und ein unmittelbar auf den Träger aufkaschiertes erstes Element einer Klettverbindung umfasst, wobei die Haltefläche teilweise in die Oberfläche an der Vorderseite des Trägers eingepresst ist.

Flächentemperierungssysteme und darin einsetzbare Halteflächen sind aus dem Stand der Technik bekannt. Derartige Flächentemperierungssysteme werden zum Heizen und Kühlen von Räumen eingesetzt, wobei in Fußböden, Wänden oder Decken verlegte, von einem Wärmeträgermedium durchströmte Rohrleitungen in einer Estrichschicht in Fußböden, Wänden oder Decken eingegossen sind. Vor dem Vergießen mit Estrich sind die Rohrleitungen üblicherweise durch geeignete Schienen oder Halter auf Trägern gehaltert. Zur einfacheren und schnelleren Verlegung ist es bekannt, die Rohrleitungen mittels einer Klettverbindung auf den Trägern zu festzulegen. Beispielsweise beschreibt die DE 20 2010 009 133 U1 ein Flächentemperierungssystem mit einer Klett-Faserplatte aus einem formstabilen, flächigen Träger mit einer Dicke zwischen 2,5 mm und 7 mm, auf den eine gewebeverstärkte Folie aufgebracht ist, die ein erstes Element einer Klettvorrichtung bildet, und einem flexiblen Rohr, das zumindest teilweise mit einem zweiten Element der Klettvorrichtung ummantelt ist. Aufgrund der Dicke des formstabilen flächigen Trägers ist ein derartiges Flächentemperierungssystem für den Einsatz bei Gebäudesanierungen, bei denen der bereits bestehende Estrich oder Bodenbelag nicht entfernt werden soll, ungeeignet. Ein weiteres Flächentemperierungssystem ist aus der DE 20 2016 104 752 U1 bekannt.

Um eine möglichst geringe Aufbauhöhe des Flächentemperierungssystems schlägt die WO 2015/139898 A1 eine als Haltefläche bezeichnete Tiefziehfolie mit einer Reliefstruktur mit tiefen Bereichen und erhöhten Bereichen vor, wobei die tiefen Bereiche eine Rinne bilden, in der eine Rohrleitung zur Führung eines Temperierungsmediums aufgenommen werden kann. Auf eine Seite der Tiefziehfolie ist unmittelbar ein erstes Element einer Klettverbindung aufkaschiert. Die Haltefläche weist eine Mehrzahl an Durchbrüchen auf, durch die die für derartige Flächentemperierungssysteme eingesetzten, sehr fließfähigen Estriche meist auf Basis von Calciumsulfat treten können und so eine innige Verbindung zum bestehenden Untergrund eingehen können. In den in der WO 2015/139898 A1 beschriebenen Halteflächen ist das erste Element der Klettverbindung in den flächigen erhöhten Bereichen und optional an den Rändern zu den Durchbrüchen teilweise in die Oberfläche an der Vorderseite der Tiefziehfolie eingepresst. Eine derartige Haltefläche hat jedoch den Nachteil, dass der Rohrhalt eine mit einem solchen Halteelement verbundene Rohrleitung verbesserungswürdig ist, sodass die mit einem solchen Halteelement verbundene Rohrleitung nach dem Vergießen mit Estrich wegen ihres eigenen Auftriebs während des Abbindens des Estrichs zusammen mit dem an der Rohrleitung anhaftenden ersten Element der Klettverbindung nach oben aufschwimmen kann und sich so an der Estrichoberfläche abzeichnet. Dies kann zu erheblichen Unebenheiten an der Estrichoberfläche führen, was wiederum in der Gefahr des Bruches von auf der unebenen Estrichoberfläche verlegten keramischen Bodenbelägen mündet. Dadurch wird ein weiterer Arbeitsschritt bei der Gebäudesanierung erforderlich, in dem die Unebenheiten an der Estrichoberfläche schleifend abgetragen werden müssen oder die Unebenheiten durch Aufbringen einer Ausgleichsmasse ausgeglichen werden müssen. Eine ähnliche Haltefläche geht auch aus der DE 20 2015 105 645 U1 hervor.

An dieser Stelle setzt die vorliegende Erfindung ein, deren Aufgabe darin liegt, eine Haltefläche sowie ein diese Haltefläche umfassendes Flächentemperierungssystem zur Verfügung zu stellen, die die Nachteile des Stands der Technik überwinden. Insbesondere soll die erfindungsgemäße Haltefläche bei niedriger Aufbauhöhe des Flächentemperierungssystems einen Nachbearbeitungsschritt nach dem Vergießen mit Estrich unnötig machen. Darüber hinaus soll die erfindungsgemäße Haltefläche ein nahezu beliebiges Verlegemuster der Rohrleitung auf der erfindungsgemäßen Haltefläche ermöglichen.

Diese und andere Aufgaben werden durch eine Haltfläche mit den Merkmalen des Anspruchs 1 bzw. durch ein Flächentemperierungssystem mit den Merkmalen des Anspruchs 12 gelöst. Bevorzugte Ausführungsformen der Erfindung sind in den abhängigen Ansprüchen beschrieben.

Gemäß der vorliegenden Erfindung wurde erkannt, dass eine schleifende oder ausgleichende Nachbearbeitung der Estrichoberfläche zum Ausgleich von Oberflächenunebenheiten nicht mehr erforderlich ist, wenn eine Mehrzahl der erhöhten Bereichen, beispielsweise zwei, drei, vier, fünf, sechs usw. erhöhte Bereiche, eine Erhöhungsanordung mit einer Außenkontur bilden und die Stellen, in denen das erste Element der Klettverbindung in die erhöhten Bereiche der Haltefläche eingepresst ist, im Randbereich der erhöhten Bereiche angeordnet sind und der Außenkontur der Erhöhungsanordung folgen. Bei einem flächigen Einpressen des ersten Elements der Klettverbindung in die erhöhten Bereiche gemäß WO 2015/139898 A1 steht lediglich ein geringer Anteil des ersten Elements zur Bildung der Klettverbindung zur Verfügung, so dass ein auf die flächigen erhöhten Bereiche aufgebrachtes, ein zweites Element der Klettverbindung umfassendes Rohr mit lediglich einer geringen Klettkraft an der Haltefläche gehalten wird. Dadurch kann es nach dem Vergießen mit Estrich zu einem Aufschwimmen des Rohres kommen. Daher ist eine Festlegung des Rohres an der Haltefläche in den erhöhten Bereichen nachteilig, sodass es zu Einschränkungen in der Wahl des Rohrverlegermusters kommt. Erfindungsgemäß sind die Stellen, in denen das erste Element der Klettverbindung in die erhöhten Bereiche der Haltefläche eingepresst ist, jedoch nicht flächig, sondern linienförmig im Randbereich entlang der Außenkontur der Erhöhungsanordnungen angeordnet. Damit ist an den Stellen der Erhöhungsanordnungen, an denen das erste Element der Klettverbindung nicht in die erhöhten Bereiche der Haltefläche eingepresst ist, eine gute Rohranbindung an die Haltefläche möglich. Darüber hinaus wurde erfindungsgemäß erkannt, dass die Stellen, an denen das erste Element der Klettverbindung in die erhöhten Bereiche der Haltefläche eingepresst ist, an der dem ersten Element der Klettverbindung abgewandten Seite des Trägers, also an der Rückseite der erfindungsgemäßen Haltefläche, zur Ausbildung einer Klebeverbindung an den Untergrund weniger gut geeignet sind als andere Stellen, in denen das erste Element der Klettverbindung eben nicht in die erhöhten Bereiche der Haltefläche eingepresst ist. Da in der erfindungsgemäßen Haltefläche durch das linienförmige Einpressen des ersten Elements der Klettverbindung in die erhöhten Bereiche der Haltefläche der Anteil dieser Stellen geringer ist, ist die erfindungsgemäße Haltefläche zum Aufkleben auf den Untergrund besser geeignet. Dies ist insbesondere beim Aufbringen der erfindungsgemäßen Haltefläche auf Dämmstoffmatten von Bedeutung. Hier war es bislang erforderlich, solche Halteflächen auf die Dämmstoffmatten mit hohem Aufwand aufzunähen. Aufgrund der erhöhten Klebefläche der erfindungsgemäßen Haltefläche an solchen Dämmstoffmatten ist es mit der erfindungsgemäßen Haltefläche ausreichend, diese auf solche Dämmstoffmatten lediglich aufzukleben. Auf diese Weise wird der Aufwand für den Einbau eines erfindungsgemä-ßen Flächentemperierungssystems, das eine derartige erfindungsgemäße Haltefläche umfasst, erheblich verringert.

Dementsprechend liegt die vorliegende Erfindung in der Bereitstellung einer Haltefläche für ein Flächentemperierungssystem, die einen Träger, der eine Reliefstruktur mit tiefen Bereichen und erhöhten Bereichen aufweist, und ein unmittelbar auf den Träger aufkaschiertes erstes Element einer Klettverbindung umfasst, wobei das erste Element der Klettverbindung in den erhöhten Bereichen teilweise in die Oberfläche an der Vorderseite des Trägers eingepresst ist, wobei sich die Haltefläche erfindungsgemäß dadurch auszeichnet, dass eine Mehrzahl der erhöhten Bereichen eine Erhöhungsanordnung mit einer Außenkontur bilden und die Stellen, in denen das erste Element der Klettverbindung in die erhöhten Bereiche der Haltefläche eingepresst ist, im Randbereich der erhöhten Bereiche angeordnet sind und der Außenkontur der Erhöhungsanordnung folgen.

Wie er hierin verwendet wird, bedeutet der Begriff "Kunststoffrohr" ein Vollkunststoffrohr oder ein Metall-Kunststoff-Verbundrohr. In Bezug auf das erfindungsgemäßen Kunststoffrohr wird der Begriff "flexibel" hierin so verwendet, dass das erfindungsgemäße flexible Kunststoffrohr Biegeradien ermöglicht, die zur Verlegung eines Rohres für ein Flächentemperierungssystem erforderlich sind. Wie hierin verwendet, bezieht sich der Begriff "Reliefstruktur" auf die durch die tiefen Bereiche und die erhöhten Bereiche gebildeten Niveau Unterschiede, während sich der Begriff "Außenkontur" der Erhöhungsanordnung auf den Umriss der Erhöhungsanordnung einer Haltefläche bezieht, wenn die Haltefläche von oben betrachtet wird. Wie hierin verwendet, bedeutet der Begriff "Randbereich" in Bezug auf die erhöhten Bereiche einen Bereich, der einen Abstand von etwa 0,5 mm bis 3 mm vom Rand des betreffenden erhöhten Bereichs besitzt.

Hinsichtlich der erfindungsgemäßen Haltefläche ist es bevorzugt, wenn die Stellen, in denen das erste Element der Klettverbindung in die erhöhten Bereiche der Haltefläche eingepresst ist, Unterbrechungen aufweisen. Auf diese Weise wird der Flächenanteil, von denen das erste Element der Klettverbindung tatsächlich zur Ausbildung einer wirksamen Klettverbindung zur Verfügung steht, weiter erhöht, sodass das Aufschwimmen des Rohres nach dem Vergießen mit Estrich noch unwahrscheinlicher wird.

Alternativ dazu kann es von Vorteil sein, wenn die Stellen, in denen das erste Element der Klettverbindung in die erhöhten Bereiche der Haltefläche eingepresst ist, zusammenhängend verlaufen. Auf diese Weise ist die erfindungsgemäße Haltefläche maschinell leichter herzustellen.

Hinsichtlich der Form der erhöhten Bereiche der Haltefläche kann es bevorzugt sein, wenn die erhöhten Bereiche kreisförmig, ringförmig, kreuzförmig, wellenförmig, linienförmig, eckig, buchstabenförmig, zahlenförmig oder als eine Kombination der genannten Formen ausgebildet sind. Derartige Ausgestaltungen der weiteren Stellen haben sich in der Praxis als besonders effektiv und einfach zu erzeugen erwiesen.

Es kann auch von Nutzen sein, wenn das erste Element der Klettverbindung an weiteren Stellen in den tiefen Bereichen teilweise in die Oberfläche an der Vorderseite des Trägers eingepresst ist. Zwischen den Verbindungsstellen, also den erhöhten Bereichen, hängt das erste Element der Klettverbindung frei, was nach dem Vergießen mit Estrich zum Aufschwimmen der auf die Haltefläche aufgebrachten Rohrleitung zusammen mit dem an der Rohrleitung anhaftenden ersten Element der Klettverbindung führt. Dementsprechend kann die Rohrleitung bei Verwendung der erfindungsgemäßen Haltefläche nur in weit geringerem Umfang aufschwimmen, weil die Bereiche, in denen das erste Element der Klettverbindung lose ist, signifikant kleiner geworden sind. Damit treten an der Estrichoberfläche bei Verwendung der erfindungsgemäßen Haltefläche keine Unebenheiten mehr auf, die in einem Nachbearbeitungsschritt abgetragen werden müssten. Dabei kann es von besonderem Vorteil sein, wenn sich die weiteren Stellen, an denen das erste Element der Klettverbindung in den tiefen Bereichen teilweise in die Oberfläche an der Vorderseite des Trägers eingepresst ist, in jeweils etwa mittig zwischen zwei erhöhten Bereichen angeordnet ist. Auf diese Weise kann das Aufschwimmen des flexiblen Kunststoffrohres mit einer möglichst geringen Anzahl an weiteren Anbindungsstellen effektiv verringert werden. Alternativ oder zusätzlich dazu kann es sich als günstig erweisen, wenn die weiteren Stellen punktförmig, kreisförmig, ringförmig, kreuzförmig, wellenförmig, linienförmig, eckig, buchstabenförmig, zahlenförmig oder als eine Kombination der genannten Formen ausgebildet sind. Derartige Ausgestaltungen der weiteren Stellen haben sich in der Praxis als besonders effektiv und einfach zu erzeugen erwiesen.

Hinsichtlich der Geometrie der Form der Erhöhungsanordnungen der Haltefläche kann es bevorzugt sein, wenn die Erhöhungsanordnungen der Haltefläche unabhängig voneinander jeweils punktförmig, kreisförmig, ringförmig, kreuzförmig, wellenförmig, linienförmig, eckig, buchstabenförmig, zahlenförmig oder als eine Kombination der genannten Formen ausgebildet sind.

Es kann bevorzugt sein, wenn der Träger als Tiefziehfolie ausgebildet ist. Unter Herstellungsgesichtspunkten ist eine Tiefziehfolie, insbesondere mit einer Wandstärke von etwa 0,3 mm bis 3 mm, vorzugsweise von 0,4 mm bis 2 mm, besonders geeignet.

Die erfindungsgemäße Haltefläche kann eine beliebige Form aufweisen. Bevorzugt sind jedoch Formen, die das vollständige Auslegen von Flächen ohne größere Überlappungsbereiche erlauben. Daher weist die erfindungsgemäße Haltefläche vorzugsweise eine rechteckige, quadratische oder sechseckige Form auf.

Bevorzugt beträgt der Höhenunterscheid zwischen den tiefen Bereichen und erhöhten Bereichen des Trägers etwa 0,5 mm bis 3 mm. Dadurch wird eine erheblich höhere Kontaktfläche zwischen dem ersten Element der Klettverbindung und dem flexiblen Kunststoffrohr des erfindungsgemäßen Flächentemperierungssystems gebildet.

Es kann auch günstig sein, wenn der Träger an seiner dem ersten Element der Klettverbindung abgewandten Seite selbstklebende Bereiche aufweist. Dies trägt zur einfachen Verlegbarkeit des erfindungsgemäßen Flächentemperierungssystems bei. Treten die Selbstklebeeigenschaften in Überlappungsbereichen zweier erfindungsgemäßer Halteflächen auf, können dadurch zwei benachbarte erfindungsgemäße Halteflächen miteinander verbunden werden. Erstrecken sich die Selbstklebeeigenschaften über die Überlappungsbereiche hinaus, können erfindungsgemäße Halteflächen so am Untergrund fixiert werden.

Es kann auch bevorzugt sein, wenn die Haltefläche eine Mehrzahl von Durchbrüchen aufweist. Dadurch ist gewährleistet, dass die für derartige Flächentemperierungssysteme eingesetzten, sehr fließfähigen Estriche meist auf Basis von Calciumsulfat an den Durchbrüchen durch die erfindungsgemäße Haltefläche treten können und so eine innige Verbindung zum bestehenden Untergrund eingehen können.

Ebenso kann es vorteilhaft sein, wenn die tiefen Bereiche Kanäle zur Aufnahme eines flexiblen Kunststoffrohrs zur Führung eines Temperierungsmediums bilden. Diese Kanäle können beim Verlegen für eine leicht erzielbare, gleichmäßige Verteilung des flexiblen Kunststoffrohrs an der erfindungsgemäßen Haltefläche und dadurch zur Gewährleistung einer über die Fläche gleichmäßigen Wärmeabgabe durch das erfindungsgemäße Flächentemperierungssystem genutzt werden.

Hinsichtlich des erfindungsgemäßen Flächentemperierungssystems kann es sich als günstig erweisen, wenn das zweite Element der Klettverbindung spiralförmig oder doppelspiralförmig an der Außenseite des flexiblen Kunststoffrohrs angeordnet ist. Bei geringem Materialaufwand sorgt dies für eine dennoch hohe Häufigkeit der Kontaktstellen zwischen dem flexiblen Kunststoffrohr und der erfindungsgemäßen Haltefläche.

Bevorzugt handelt es sich bei dem polymeren Material des flexiblen Kunststoffrohrs um vernetztes Polyethylen (PE-X) oder PE-RT. Wie er hierin verwendet wird, bedeutet der Begriff "PE-RT" ein Polyethylen mit erhöhter Temperaturbeständigkeit gemäß ISO 24033. Eine erste Schicht aus PE-X ist aufgrund der thermischen und mechanischen Eigenschaften (wie Schlagzähigkeit, Knickfestigkeit, Punktlastbeständigkeit) bevorzugt. Wie hierin verwendet wird, bedeutet der Begriff "PE-X" vernetztes Polyethylen, wobei Peroxid-vernetztes Polyethylen (PE-Xa), Silan-vernetztes Polyethylen (PE-Xb), Elektronenstrahlvernetztes Polyethylen (PE-Xc) sowie azovernetztes Polyethylen (PE-Xd) umfasst sind. Gemäß der vorliegenden Erfindung wird Peroxid-vernetztes Polyethylen (PE-Xa) als bevorzugtes polymeres Material der ersten Schicht eingesetzt. Die Vernetzung zum vernetzten Polyethylen erfolgt vorzugsweise wie in der DE 102 51 152 B4 beschrieben. Darüber hinaus kann das polymere Material der ersten Schicht weiter einen Haftvermittler (vorzugsweise ein funktionalisiertes Polyolefin, insbesondere ein Maleinsäureanhydrid-gepfropftes LLDPE (lineares Polyethylen geringerer Dichte)) und/oder eine Diffusionssperrschicht, insbesondere aus Polyvinylakohol (PVA) oder Ethylen-Vinylalkohol-Copolymer (EVOH) umfassen.

Gemäß einer Ausführungsform der vorliegenden Erfindung wird ein Element der Klettverbindung durch Haken, Schlingen und/oder Fasern gebildet, die in ein Gewirke, ein Vlies, ein Veloursgewebe oder dergleichen des anderen Elements der Klettverbindung lösbar eingreifen können. Die Klettverbindung gewährleistet so eine lösbare Verbindung zwischen der Trägerfolie und dem flexiblen Kunststoffrohr, wodurch das flexible Kunststoffrohr auf der erfindungsgemäßen Haltefläche reversibel festgelegt wird. Dabei ist es unter Kostengesichtspunkten bevorzugt, wenn das zweite Element der Klettverbindung die Haken, Schlingen und/oder Fasern aufweist, während das erste Element der Klettverbindung durch das Gewirke, das Vlies, das Veloursgewebe oder ein Plüsch-, Frottee- oder sonstiges textiles Flächengebilde gebildet wird. Umgekehrt ist es aber auch trotzdem möglich, dass das zweite Element der Klettverbindung durch das Gewirke, das Vlies, das Veloursgewebe, das Plüsch-, Frottee- oder sonstiges textiles Flächengebilde gebildet wird, während das erste Element der Klettverbindung die Haken, Schlingen und/oder Fasern aufweist.

Es kann auch von Nutzen sein, wenn die Haltefläche auf eine Dämmstoffmatte aufgebracht ist, die Mineralwolle umfasst. Dabei ist ein Verkleben der Haltefläche mit der Dämmstoffmatte als Methode zur Aufbringung bevorzugt. Durch den erhöhten Flächenanteil der erfindungsgemäßen Haltefläche, bei dem ein Verkleben an der Unterseite begünstigt ist, ist es ausreichend, die erfindungsgemäße Haltefläche auf eine derartige Dämmstoffmatte aufzukleben. Ein Vernähen erfindungsgemäßen Haltefläche mit der Dämmstoffmatten ist deshalb nicht erforderlich. Dabei hat sich als günstig erwiesen, wenn die Dämmstoffmatte ein Fasermaterial, insbesondere Mineralwolle, Glasfaser, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst. Dämmstoffmatten sind aus derartigen Materialien einfach herstellbar.

Die erfindungsgemäße Haltefläche, das erfindungsgemäße Flächentemperierungssystem sowie einzelne Teile davon können auch zeilenweise oder schichtweise unter Verwendung eines zeilenaufbauenden oder schichtaufbauenden Fertigungsverfahrens (z.B. 3D-Druck) hergestellt werden.

Im Folgenden soll die vorliegende Erfindung unter Bezugnahme auf die in den Figuren dargestellten Ausführungsformen im Detail erläutert werden. Insoweit sich Teile oder Bauelemente in ihrer Funktion entsprechen, wird deren Beschreibung nicht in jeder der folgenden Figuren wiederholt. Es zeigen:
Fig. 1 einen Ausschnitt aus einer Haltefläche gemäß einer Ausführungsform der vorliegenden Erfindung;
Fig. 2 einen vergrößerten Ausschnitt aus der in Fig. 1 gezeigten, erfindungsgemäßen Haltefläche; und

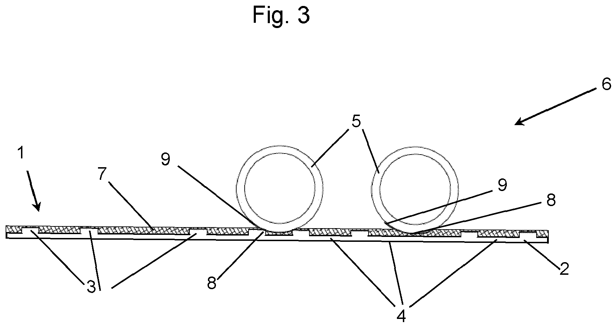

Fig. 3 einen Ausschnitt aus einer Querschnittdarstellung eines Flächentemperierungssystems gemäß einer Ausführungsform der vorliegenden Erfindung, das die in Fig. 1 gezeigte Haltefläche umfasst.

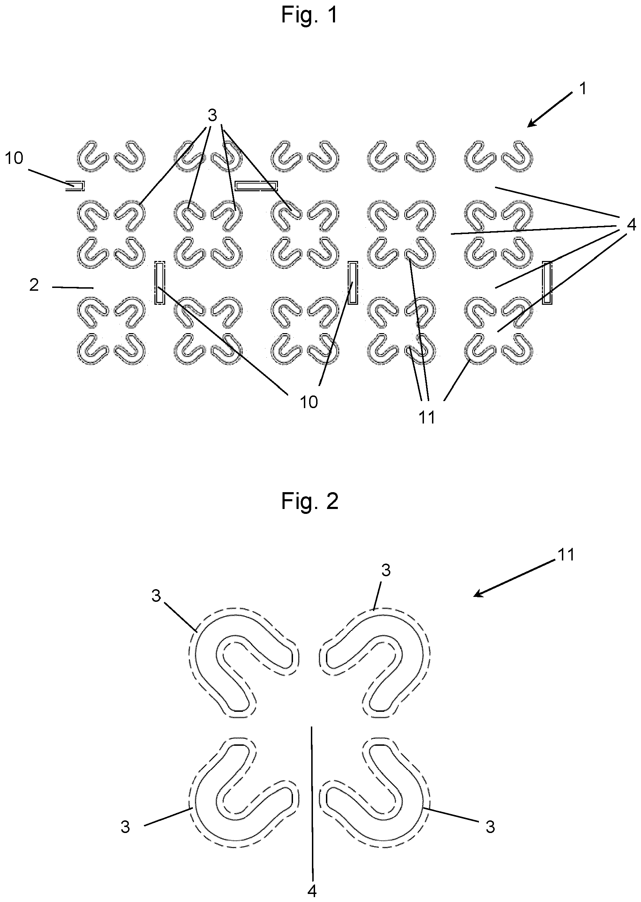

In Fig. 1 ist ein Ausschnitt aus einer Haltefläche 1 gemäß einer Ausführungsform der vorliegenden Erfindung gezeigt. Die erfindungsgemäße Haltefläche 1 umfasst einen in dieser Ausführungsform als Tiefziehfolie ausgebildeten Träger 2. Der Träger weist eine Wandstärke von vorzugsweise 0,3 mm bis 3 mm auf. In der gezeigten Ausführungsform beträgt die Wandstärke ca. 0,6 mm. Der Träger 2 weist erhöhte Bereiche 3 auf, die in der dargestellten Ausführungsform buchstabenförmig, hier insbesondere U-förmig ausgebildet sind. Dabei weisen die offenen Enden zweier erhöhter Bereiche 3 aufeinander zu. Dadurch bilden vier benachbarte erhöhte Bereich 3 eine Erhöhungsanordnung 11. Eine derartige Erhöhungsanordnung 11 ist in Fig.2 in einer vergrößerten Draufsicht gezeigt. Darin ist die Kontur der erhöhten Bereiche 3 gestrichelt dargestellt, während die Stellen, an denen das erste Element sieben der Klettverbindung 8 in die erhöhten Bereiche 3 eingepresst ist, mit einer durchgezogenen Linie dargestellt sind. In der in Fig. 1 und Fig. 2 gezeigten Ausführungsform der erfindungsgemäßen Haltefläche 1 weist die Erhöhungsanordnung 11 näherungsweise eine kreuzförmige Außenkontur auf. Dabei sind die Ecken des Kreuzes abgerundet. Die Stellen, in denen das erste Element 7 der Klettverbindung 8 in die erhöhten Bereiche 3 der Haltefläche 1 eingepresst ist, sind dabei im Randbereich der erhöhten Bereiche 3 angeordnet sind und folgen der Außenkontur der Erhöhungsanordnung 11 folgen. Damit weisen die Stellen, in denen das erste Element 7 der Klettverbindung 8 in die erhöhten Bereiche 3 der Haltefläche 1 eingepresst ist, innerhalb einer Erhöhungsanordnung 11 ebenfalls eine kreuzförmige Gesamtgeometrie mit Unterbrechungen auf.

Zwischen den Erhöhungsanordnungen 11, aber auch zwischen den erhöhten Bereichen 3 einer Erhöhungsanordnung 11 liegen tiefe Bereiche 4. Dadurch entsteht eine Reliefstruktur, deren Höhe in der gezeigten Ausführungsform etwa 1,5 mm beträgt. Durch diese Reliefstruktur werden in den tiefen Bereiche Kanäle ausgebildet, in die ein flexibles Kunststoffrohr 5 eines erfindungsgemäßen Flächentemperierungssystems 6 aufgenommen werden kann.

Auf den als Tiefziehfolie ausgebildeten Träger 2 ist ein erstes Element 7 einer Klettverbindung 8 aufkaschiert. Der Träger ist dabei vollflächig durch das erste Element 7 der Klettverbindung bedeckt. Das erste Element 7 der Klettverbindung 8 ist vorzugsweise als Gewirke ausgebildet, kann alternativ aber auch als Vlies, Veloursgewebe, Plüsch-, Frottee- oder sonstiges textiles Flächengebilde ausgebildet sein. Dazu ist das erste Element 7 der Klettverbindung 8 in den erhöhten Bereichen 3 in die Oberfläche an der Vorderseite des Trägers 2 eingepresst, was bevorzugt direkt bei der Herstellung beim Tiefziehen des Trägers 2 im angeschmolzenen Zustand des Trägers 2 erfolgen kann. Dabei sind die Stellen, in denen das erste Element 7 der Klettverbindung 8 in die Oberfläche an der Vorderseite des Trägers 2 eingepresst sind, derart ausgebildet, dass sie der Außenkontur der erhöhten Bereiche 3 folgen. In Fig. 1 ist die Außenkontur der erhöhten Bereiche 3 gestrichelt dargestellt. Durch die Anordnung von vier benachbarten erhöhten Bereiche 3 näherungsweise in Kreuzform entsteht ein erhöhter Gesamtbereich, der Unterbrechungen aufweist. Dadurch bilden die Stellen, in denen das erste Element 7 der Klettverbindung 8 in den erhöhten Bereichen 3 in die Oberfläche an der Vorderseite des Trägers 2 eingepresst, bei der in Fig. 1 dargestellten Ausführungsform eine kreuzförmige Anordnung, die in einigen Ecken unterbrochen ist. Damit weisen die Stellen, in denen das erste Element 7 der Klettverbindung 8 in die erhöhten Bereiche 3 des Trägers 2 eingepresst ist, eine Linienform auf. Dadurch erfolgt eine linienförmige Verbindung zwischen dem ersten Element 7 der Klettverbindung 8 und dem Träger 2. In den weiteren Stellen der erhöhten Bereiche 3 ist das erste Element 7 der Klettverbindung 8 nicht mit dem Träger 2 verbunden. Diese Stellen sowie die tiefen Bereiche 4 des Trägers 2 sind zur Ausbildung der Klettverbindung 8 bevorzugt.

In der erfindungsgemäßen Haltefläche 1 sind in den tiefen Bereichen 4 weitere Stellen 10 vorhanden, in denen das erste Element 7 der Klettverbindung 8 in die Oberfläche an der Vorderseite des Trägers 2 eingepresst ist. In der in Fig. 1 dargestellten Ausführungsform sind diese weiteren Stellen 10 rechteckförmig ausgebildet. In alternativen Ausführungsformen können diese weiteren Stellen auch eine alternative Geometrie besitzen, beispielsweise auch punktförmig, ringförmig (Fig. 1b), kreuzförmig, wellenförmig, linienförmig, buchstabenförmig, zahlförmig oder als eine Kombination der genannten Formen ausgebildet sein. Das Einpressen des ersten Elements 7 in die Oberfläche des Trägers 2 in den weiteren Stellen 10 kann mittels entsprechend geformter und beheizter Stempel erfolgen. Bevorzugt sind die weiteren Stellen 10 jeweils etwa mittig zwischen zwei erhöhten Bereichen 3 angeordnet ist. Die weiteren Stellen machen das Netz von Verbindungstellen, in denen das erste Element 7 in die Oberfläche des Trägers 2 eingebettet ist, wesentlich engmaschiger. Dadurch wird ein freies Hängen des ersten Elements 7 zwischen den Verbindungsstellen aufgrund eines Verringerns des Abstands zwischen den Verbindungsstellen wirksam verringert. Dadurch kann das flexible Kunststoffrohr 5 nur in weit geringerem Umfang aufschwimmen. Damit treten an der Estrichoberfläche bei Verwendung der erfindungsgemäßen Haltefläche 1 keine Unebenheiten mehr auf, die in einem Nachbearbeitungsschritt abgetragen oder ausgeglichen werden müssten.

In alternativen Ausführungsformen kann die erfindungsgemäße Haltefläche 1 darüber hinaus auch Durchbrüche aufweisen. Solche Durchbrüche gewährleisten ein Hindurchströmen des Estrichs durch die erfindungsgemäße Haltefläche 1 und dadurch eine stabile Verbindung der erfindungsgemäßen Haltefläche 1 zum vorhandenen Untergrund.

In Fig. 2 ist ein erfindungsgemäßes Flächentemperierungssystem 6 in einer Querschnittsdarstellung gezeigt. Das erfindungsgemäße Flächentemperierungssystem 6 umfasst dabei ein flexibles Kunststoffrohr 5 und eine erfindungsgemäße Haltefläche 1. Die Außenseite des flexiblen Kunststoffrohrs 5 ist in Form von Spiralen von einem zweiten Element 9 der Klettverbindung 8 gebildet. Das flexible Kunststoffrohr 5 umfasst eine erste Schicht aus polymerem Material, die ein Lumen zur Führung eines Wärmeträgermediums umgibt. Die erste Schicht des flexiblen Kunststoffrohrs 5 ist vorzugsweise aus Peroxid-vernetztem Polyethylen (PE-Xa), um das herum in der angegeben Reihenfolge eine Haftvermittlerschicht und eine Diffusionssperrschicht angeordnet sind. Bevorzugt ist die erste Schicht sauerstoffdicht gemäß DIN 4726 und wird vorzugsweise durch Coextrusion hergestellt. Die Außenseite des flexiblen Kunststoffrohres 5 bildet das zweite Element 9 der Klettverbindung 8, das in Form von Bändern ausgebildet ist, die in im Wesentlichen parallel zueinander verlaufenden Spiralen um die erste Schicht angeordnet sind. Das zweite Element 9 der Klettverbindung 8 umfasst Haken, Fasern oder ähnliches.

Das flexible Kunststoffrohr 5 ist in dem erfindungsgemäßen Flächentemperierungssystem 6 auf die erfindungsgemäße Haltefläche 1, in der das erste Element 7 auf den Träger 2 aufgebracht ist, das als Gewirke ausgebildet ist, alternativ auch als Vlies, Veloursgewebe, Plüsch-, Frottee- oder sonstiges textiles Flächengebilde ausgebildet sein kann. Das flexible Kunststoffrohr 5, an dessen Außenseite sich das zweite Element 9 der Klettverbindung 8 befindet, ist auf dem ersten Element 7 lösbar unter Bildung der Klettverbindung 8 an der erfindungsgemäßen Haftfläche 1 festgelegt. Dabei kann das flexible Kunststoffrohr 5 sowohl in erhöhten Bereichen 3 als auch in tiefen Bereichen 4 mit der erfindungsgemäßen der Haltefläche 1 über eine Klettverbindung 8 verbunden sein.

Bevorzugt verläuft das flexible Kunststoffrohr 5 in durch die tiefen Bereiche 4 gebildeten Kanälen, um die Aufbauhöhe des erfindungsgemäßen Flächentemperierungssystems 6 niedrig zu halten. Alternativ oder zusätzlich kann das flexible Kunststoffrohr 5 aber auch über die erhöhten Bereichen 3 verlaufen. Dabei ist das flexible Kunststoffrohr 5 bevorzugt so angeordnet, dass die Klettverbindung 8 an den Stellen erfolgt, in denen das erste Element 7 der Klettverbindung 8 nicht in den Träger 2 eingepresst ist. Der Verlauf des flexiblen Kunststoffrohrs 5 teilweise auch in den erhöhten Bereichen 3 bedingt zwar eine höhere Aufbauhöhe des erfindungsgemäßen Flächentemperierungssystems 6, lässt sich aber zum Teil zumindest in den Umlenkbereichen nicht verhindern.

Zum Verlegen eines als Fußbodenheizung ausgebildeten erfindungsgemäßen Flächentemperierungselements 6 wird die erfindungsgemäße Haltefläche 1 zunächst auf dem vorhandenden Untergrund vollflächig ggf. nach vorherigem Zuschneiden ausgelegt. Vorzugsweise werden benachbarte erfindungsgemäße Halteflächen 1 in Überlappungsbereichen aufgrund von selbstklebenden Bereichen an der Unterseite des Trägers 2 miteinander verbunden. Zusätzlich oder alternativ dazu können die erfindungsgemäßen Halteflächen 1 aufgrund der selbstklebenden Bereiche an der Unterseite des Trägers 2 auch auf den Untergrund aufgeklebt und dadurch vorfixiert werden. In besonders bevorzugten Ausführungsformen wird der Untergrund vor dem aufbringen der erfindungsgemäßen Haltefläche 1 mit Dämmstoff matten, die bevorzugt ein Fasermaterial, wie beispielsweise Mineralwolle, enthalten können, ausgelegt. Die erfindungsgemäße Haltefläche 1 kann auch werkseitig auf solche Dämmstoffmatten aufgeklebt sein. Dann werden solche mit der erfindungsgemäßen Haltefläche 1 versehenen Dämmstoffmatten auf dem Untergrund ausgelegt.

Daraufhin wird das flexible Kunststoffrohr 5 im gewünschten Muster auf den erfindungsgemäßen Halteflächen 1 verlegt und angedrückt, so dass eine Klettverbindung 8 ausgebildet wird. Zur Korrektur des Verlegemusters kann die reversibel ausgebildete Klettverbindung 8 durch Anheben des flexiblen Kunststoffrohrs 5 gelöst werden, wonach dieses erneut verlegt werden kann. Abschließend wird die Anordnung mit Estrich vergossen. Durch das engmaschige Netz von Stellen und/oder Bereichen, in denen das erste Element 7 der Klettverbindung 8 in die Oberfläche des Trägers 2 eingepresst ist, ist ein Aufschwimmen des flexiblen Kunststoffrohrs 5 während des Härtens des Estrichs erheblich reduziert. Damit treten nach der Aushärtung des Estrichs keine durch das Aufschwimmen des flexiblen Kunststoffrohrs 5 verursachten Unebenheiten mehr auf, ein Nachbearbeitungsschritt, durch den diese Unebenheiten abgetragen oder ausgeglichen werden müssten, ist nicht erforderlich.

Die vorliegende Erfindung wurde unter Bezugnahme auf die in den Figuren gezeigte Ausführungsform der vorliegenden Erfindung im Detail beschrieben. Es versteht sich, dass die vorliegende Erfindung nicht auf die gezeigte Ausführungsform beschränkt ist, sondern sich der Umfang der vorliegenden Erfindung aus den beiliegenden Ansprüchen ergibt.

## Patentansprüche

1. Haltefläche (1) für ein Flächentemperierungssystem (6), umfassend:
- einen Träger (2), der eine Reliefstruktur mit tiefen Bereichen (4) und erhöhten Bereichen (3) aufweist; und
- ein unmittelbar auf den Träger (2) aufkaschiertes erstes Element (7) einer Klettverbindung (8);
wobei das erste Element (7) der Klettverbindung (8) in den erhöhten Bereichen (3) teilweise in die Oberfläche an der Vorderseite des Trägers (2) eingepresst ist,
wobei eine Mehrzahl an erhöhten Bereichen (3) eine Erhöhungsanordnung (11) mit einer Außenkontur bilden; **dadurch gekennzeichnet, dass**
die Stellen, in denen das erste Element (7) der Klettverbindung (8) in die erhöhten Bereiche (3) der Haltefläche (1) eingepresst ist, im Randbereich der erhöhten Bereiche (3) angeordnet sind und der Außenkontur der Erhöhungsanordnung (11) folgen.

2. Haltefläche (1) nach Anspruch 1, **dadurch gekennzeichnet, dass** die Stellen, in denen das erste Element (7) der Klettverbindung (8) in die erhöhten Bereiche (3) der Haltefläche (1) eingepresst ist, Unterbrechungen aufweisen.

3. Haltefläche (1) nach Anspruch 1, **dadurch gekennzeichnet, dass** die Stellen, in denen das erste Element (7) der Klettverbindung (8) in die erhöhten Bereiche (3) der Haltefläche (1) eingepresst ist, zusammenhängend verlaufen.

4. Haltefläche (1) nach einem der Ansprüche 1 bis 3, **dadurch gekennzeichnet, dass** das erste Element (7) der Klettverbindung (8) an weiteren Stellen (10) in den tiefen Bereichen (4) teilweise in die Oberfläche an der Vorderseite des Trägers (2) eingepresst ist.

5. Haltefläche (1) nach Anspruch 4, **dadurch gekennzeichnet, dass** die weiteren Stellen (10), an denen das erste Element (7) der Klettverbindung (8) in den tiefen Bereichen (4) teilweise in die Oberfläche an der Vorderseite des Trägers (2) eingepresst ist, in jeweils etwa mittig zwischen zwei erhöhten Bereichen (3) angeordnet ist.

6. Haltefläche (1) nach Anspruch 4 oder Anspruch 5, **dadurch gekennzeichnet, dass** die weiteren Stellen (10) punktförmig, kreisförmig, ringförmig, kreuzförmig, wellenförmig, linienförmig, eckig, buchstabenförmig, zahlenförmig oder als eine Kombination der genannten Formen ausgebildet sind.

7. Haltefläche (1) nach einem der Ansprüche 1 bis 6, **dadurch gekennzeichnet, dass** die Erhöhungsanordnungen (11) einer Haltefläche (1) unabhängig voneinander jeweils punktförmig, kreisförmig, ringförmig, kreuzförmig, wellenförmig, linienförmig, eckig, buchstabenförmig, zahlenförmig oder als eine Kombination der genannten Formen ausgebildet sind.

8. Haltefläche (1) nach einem der Ansprüche 1 bis 7, **dadurch gekennzeichnet, dass** der Träger (2) als Tiefziehfolie ausgebildet ist.

9. Haltefläche (1) nach einem der Ansprüche 1 bis 8, **dadurch gekennzeichnet, dass** der Träger (2) an seiner dem ersten Element (7) der Klettverbindung (8) abgewandten Seite selbstklebende Bereiche aufweist oder zumindest annähernd ganzflächig selbstklebend ausgebildet ist.

10. Haltefläche (1) nach einem der Ansprüche 1 bis 9, **dadurch gekennzeichnet, dass** die Haltefläche (1) eine Mehrzahl von Durchbrüchen aufweist.

11. Haltefläche (1) nach einem der Ansprüche 1 bis 10, **dadurch gekennzeichnet, dass** die tiefen Bereiche (4) Kanäle zur Aufnahme eines flexiblen Kunststoffrohrs (5) zur Führung eines Temperierungsmediums bilden.

12. Flächentemperierungssystem (6), umfassend:
- mindestens ein flexibles Kunststoffrohr (5), dessen Außenseite zumindest teilweise von einem zweiten Element (9) einer Klettverbindung (8) ummantelt ist;
- mindestens eine Haltefläche (1) nach einem der Ansprüche 1 bis 11.

13. Flächentemperierungssystem (6) nach Anspruch 12, **dadurch gekennzeichnet, dass** die Haltefläche (1) auf eine Dämmstoffmatte aufgebracht ist, die Mineralwolle umfasst.

14. Flächentemperierungssystem (6) nach Anspruch 13, **dadurch gekennzeichnet, dass** die Dämmstoffmatte ein Fasermaterial, insbesondere Mineralwolle, Glasfaser, Sisal, tierische Wollen und Haare, Kokos, Heu, Getreidestroh, Hanf, Steinwolle, Holzwolle, Holzwollverbundprodukte, Bambusfasern oder einen Verbund oder Mehrlagenverbund der genannten Materialien, umfasst.

## Claims

1. Holding surface (1) for a surface temperature-control system (6), comprising:
- a support (2) which comprises a relief structure having low regions (4) and raised regions (3); and
- a first element (7) of a hook and loop connection (8) that is mounted directly on the support (2);
wherein the first element (7) of the hook and loop connection (8) is pressed in part into the surface of the front side of the support (2) in the raised regions (3), wherein a plurality of raised regions (3) form a raised assembly (11) having an outer contour, **characterised in that** the spots in which the first element (7) of the hook and loop connection (8) is pressed into the raised regions (3) of the holding surface (1) are arranged in the edge portion of the raised regions (3) and follow the outer contour of the raised assembly (11).

2. Holding surface (1) according to claim 1, **characterised in that** the spots in which the first element (7) of the hook and loop connection (8) is pressed into the raised regions (3) of the holding surface (1) have interruptions.

3. Holding surface (1) according to claim 1, **characterised in that** the spots in which the first element (7) of the hook and loop connection (8) is pressed into the raised regions (3) of the holding surface (1) extend in a continuous manner.

4. Holding surface (1) according to any of claims 1 to 3, **characterised in that** the first element (7) of the hook and loop connection (8) is pressed in part into the surface of the front side of the support (2) at further spots (10), in the low regions (4).

5. Support surface (1) according to claim 4, **characterised in that** the further spots (10) at which the first element (7) of the hook and loop connection (8) is pressed in part into the surface of the front side of the carrier (2), in the low regions (4), is in each case arranged approximately centrally between two raised regions (3).

6. Holding surface (1) according to claim 4 or claim 5, **characterised in that** the further spots (10) are configured to be dot-like, circular, annular, cross-shaped, undulating, linear, angular, letter-shaped, number-shaped, or as a combination of the mentioned shapes.

7. Holding surface (1) according to any of claims 1 to 6, **characterised in that** the raised assemblies (11) of a holding surface (1) are in each case configured, independently of one another, to be dot-like, circular, annular, cross-shaped, undulating, linear, angular, letter-shaped, number-shaped, or as a combination of the mentioned shapes.

8. Holding surface (1) according to any of claims 1 to 7, **characterised in that** the support (2) is formed as a deep-drawn film.

9. Holding surface (1) according to any of claims 1 to 8, **characterised in that** the support (2) has self-adhesive regions or is configured to be self-adhesive at least approximately over the entire surface, on the side thereof remote from the first element (7) of the hook and loop connection (8).

10. Holding surface (1) according to any of claims 1 to 9, **characterised in that** the holding surface (1) comprises a plurality of apertures.

11. Holding surface (1) according to any of claims 1 to 10, **characterised in that** the low regions (4) form channels for receiving a flexible plastics tube (5) for guiding a temperature-control medium.

12. Surface temperature-control system (6), comprising:
- at least one flexible plastics tube (5), the outside of which is surrounded at least in part by a second element (9) of a hook and loop connection (8);
- at least one holding surface (1) according to any of claims 1 to 11.

13. Surface temperature-control system (6) according to claim 12, **characterised in that** the holding surface (1) is applied to an insulating mat which comprises mineral wool.

14. Surface temperature-control system (6) according to claim 13, **characterised in that** the insulating mat comprises a fibre material, in particular mineral wool, glass fibre, sisal, animal wools and hair, coconut, hay, crop straw, hemp, rock wool, wood wool, wood wool compound products, bamboo fibres, or a compound or multilayer compound of the mentioned materials.

## Revendications

1. Surface de retenue (1) pour un système de thermorégulation de surfaces (6), comprenant :
- un support (2), qui présente une structure en relief avec des zones profondes (4) et des zones surélevées (3) ; et
- un premier élément (7), contrecollé directement sur le support (2), d'une liaison agrippante (8) ;
dans laquelle le premier élément (7) de la liaison agrippante (8) est enfoncé en partie dans la surface sur le côté avant du support (2) dans les zones surélevées (3), dans laquelle
une multitude de zones surélevées (3) forment un ensemble de surélévation (11) avec un contour extérieur, **caractérisée en ce que** les emplacements, sur lesquels le premier élément (7) de la liaison agrippante (8) est enfoncé dans les zones surélevées (3) de la surface de retenue (1), sont disposés dans la zone de bord des zones surélevées (3) et suivent le contour extérieur de l'ensemble de surélévation (11).

2. Surface de retenue (1) selon la revendication 1, **caractérisée en ce que** les emplacements, sur lesquels le premier élément (7) de la liaison agrippante (8) est enfoncé dans les zones surélevées (3) de la surface de retenue (1), présentent des interruptions.

3. Surface de retenue (1) selon la revendication 1, **caractérisée en ce que** les emplacements, sur lesquels le premier élément (7) de la liaison agrippante (8) est enfoncé dans les zones surélevées (3) de la surface de retenue (1), s'étendent de manière contiguë.

4. Surface de retenue (1) selon l'une quelconque des revendications 1 à 3, **caractérisée en ce que** le premier élément (7) de la liaison agrippante (8) est enfoncé en partie dans la surface sur le côté avant du support (2) sur d'autres emplacements (10) dans les zones profondes (4).

5. Surface de retenue (1) selon la revendication 4, **caractérisée en ce que** les autres emplacements (10), sur lesquels le premier élément (7) de la liaison agrippante (8) est enfoncé en partie dans la surface sur le côté avant du support (2) dans les zones profondes (4), sont disposés respectivement à peu près au centre entre deux zones surélevées (3).

6. Surface de retenue (1) selon la revendication 4 ou la revendication 5, **caractérisée en ce que** les autres emplacements (10) sont réalisés en forme de point, en forme de cercle, en forme d'anneau, en forme de croix, en forme d'onde, en forme de ligne, de manière angulaire, en forme de lettre, en forme de chiffre ou en tant qu'une combinaison desdites formes.

7. Surface de retenue (1) selon l'une quelconque des revendications 1 à 6, **caractérisée en ce que** les ensembles de surélévation (11) d'une surface de retenue (1) sont réalisés indépendamment les uns des autres respectivement en forme de point, en forme de cercle, en forme d'anneau, en forme de croix, en forme d'onde, en forme de ligne, de manière angulaire, en forme de lettre, en forme de chiffre, ou en tant qu'une combinaison desdites formes.

8. Surface de retenue (1) selon l'une quelconque des revendications 1 à 7, **caractérisée en ce que** le support (2) est réalisé en tant que film embouti.

9. Surface de retenue (1) selon l'une quelconque des revendications 1 à 8, **caractérisée en ce que** le support (2) présente sur son côté opposé au premier élément (7) de la liaison agrippante (8) des zones autocollantes ou est réalisé au moins approximativement sur la totalité de la surface de manière autocollante.

10. Surface de retenue (1) selon l'une quelconque des revendications 1 à 9, **caractérisée en ce que** la surface de retenue (1) présente une multitude d'ajours.

11. Surface de retenue (1) selon l'une quelconque des revendications 1 à 10, **caractérisée en ce que** les zones profondes (4) forment des canaux pour recevoir un tuyau en matière plastique flexible (5) destiné à guider un milieu de thermorégulation.

12. Système de thermorégulation de surfaces (6) comprenant :
- au moins un tuyau en matière plastique flexible (5), dont le côté extérieur est enrobé au moins en partie d'un deuxième élément (9) d'une liaison agrippante (8) ;
- au moins une surface de retenue (1) selon l'une quelconque des revendications 1 à 11.

13. Système de thermorégulation de surfaces (6) selon la revendication 12, **caractérisé en ce que** la surface de retenue (1) est appliquée sur un panneau isolant, qui comprend de la laine minérale.

14. Système de thermorégulation de surfaces (6) selon la revendication 13, **caractérisé en ce que** le panneau isolant comprend un matériau à base de fibres, en particulier de la laine minérale, de la fibre de verre, du sisal, des laines et des poils d'animaux, de la noix de coco, du foin, de la paille de céréales, du chanvre, de la laine de roche, de la laine de bois, des produits composites à base de laine de bois, des fibres de bambou ou un composite ou un composite multicouche desdits matériaux.
